(19) Europäisches Patentamt
European Patent Office
Office européen des brevets

(11) Veröffentlichungsnummer: **0 050 310**
**A1**

(12) # EUROPÄISCHE PATENTANMELDUNG

(21) Anmeldenummer: **81108335.1**

(22) Anmeldetag: **15.10.81**

(51) Int. Cl.³: **F 02 M 43/00**, F 02 B 69/02

(30) Priorität: **16.10.80 DE 3039039**

(43) Veröffentlichungstag der Anmeldung: **28.04.82**
**Patentblatt 82/17**

(84) Benannte Vertragsstaaten: **AT BE CH DE FR GB IT LI LU NL SE**

(71) Anmelder: **Holtz, Gustav F., Seiffertstrasse 36, D-2800 Bremen 33 (DE)**

(72) Erfinder: **Holtz, Gustav F., Seiffertstrasse 36, D-2800 Bremen 33 (DE)**

(74) Vertreter: **Eisenführ & Speiser, Martinistrasse 24, D-2800 Bremen 1 (DE)**

(54) **Verfahren und Anlage zum Betreiben eines Verbrennungsmotors an Bord von Schiffen.**

(57) Eine Mischung aus Dieselöl und Schweröl wird befördert und dem Verbrennungsmotor eingespritzt. Um einen automatischen, wachfreien Betrieb des Verbrennungsmotors zu ermöglichen, wird das Mischöl während seiner Förderung auf die einer bestimmten Viskosität entsprechende Temperatur erwärmt, und es wird nicht eingespritztes Überschußöl auch während des Stillstands des Verbrennungsmotors zum Förderbeginn zurückgeführt.

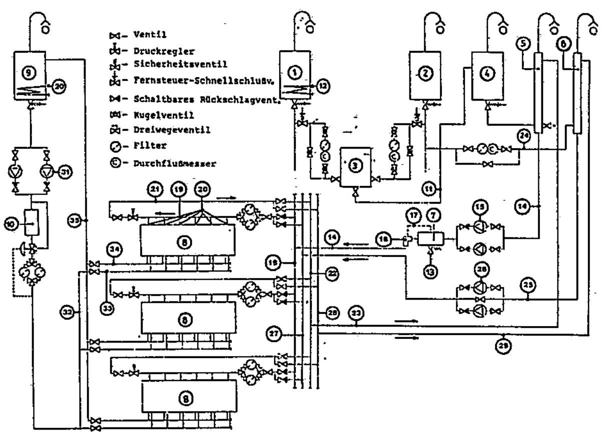


EP 0 050 310 A1

BESCHREIBUNG

Die Erfindung betrifft ein Verfahren zum Betreiben eines Verbrennungsmotors, insbesondere eines Hilfsantrieb-Dieselmotors oder eines als Hauptantrieb dienenden Mittelschnelläufer-Dieselmotors an Bord von Schiffen, mit einer Mischung aus Dieselöl und Schweröl, bei dem das Mischöl zum Verbrennungsmotor gefördert und dort eingespritzt wird.

Es ist bekannt, den an Bord eines Schiffes stets vorhandenen Hilfsantrieb-Verbrennungsmotoren ein Gemisch aus Schweröl und Dieselöl (Gasöl) als Brennstoff einzuspritzen. Bei vielen Schiffen, bei denen aus Platzgründen Mittelschnelläufer-Dieselmotoren als Hauptmaschinen eingesetzt werden, sind ebenfalls Versuche bekannt, diese Mittelschnelläufer-Dieselmotoren mit einem Gemisch aus Schweröl und Dieselöl zu betreiben, welches zuvor in einer Raffinerie gemischt wurde. Da Schweröl wesentlich preisgünstiger als Dieselöl ist, lassen sich auf diese Weise beträchtliche Kosten beim Betrieb der vornehmlich als Stromerzeuger dienenden Hilfsantriebe bzw. der als Hauptantriebsmaschinen eingesetzten Mittelschnelläufer-Dieselmotoren einsparen. Beim bislang üblichen Betrieb der Hilfsmaschinen bzw. der Mittelschnelläufer-Dieselmotoren mit solchem Mischöl haben sich jedoch Schwierigkeiten ergeben, weil diese Verbrennungsmotoren sehr empfindlich auf Abweichungen der Konsistenz des Mischöls vom vorgesehenen Wert reagieren und es deshalb häufig zu Störungen und Ausfällen dieser Antriebe kommt.

Verständlicherweise ist diese Gefahr solcher Ausfälle umso größer, je höher der Anteil des Schweröls am Mischöl ist. Naturgemäß wird jedoch ein hoher Schweröl-Anteil angestrebt. In der Praxis läßt sich aber der theoretisch mögliche Schweröl-Anteil nicht verwirklichen, weil mit Rücksicht auf die vorerwähnten Schwierigkeiten das von der Raffinerie in fertiger Mischung bezogene Mischöl einen 'sichereren' - sprich geringeren - Schweröl-anteil haben muß.

Hinzu kommt, daß sich Hilfsantrieb-Schiffsdiesel mit Mischöl nicht wachfrei, also nicht automatisch fahren lassen. Denn die den Hilfsantrieben abverlangte Leistung ändert sich in Abhängigkeit von der Belastung ständig, so daß der Brennstoffbedarf entsprechend variiert. Es muß daher dauernd darauf geachtet werden, daß den Hilfsdieseln Brennstoff von der benötigten Konsistenz zur Verfügung gestellt und das Mischöl entsprechend vorbehandelt, insbesondere vorgewärmt wird.

Der Erfindung liegt daher die Aufgabe zugrunde, ein Betriebsverfahren sowie eine zu dessen Ausführung geeignete Anlage anzugeben, mit deren Hilfe der automatische Betrieb solcher Hilfsdiesel sowie von Mittelschnellläufer-Hauptantrieben an Bord von Schiffen störungsfrei auch mit Mischöl möglich ist.

Zur Lösung dieser Aufgabe ist erfindungsgemäß verfahrenstechnisch vorgesehen, daß das Mischöl während seiner Förderung auf die einer bestimmten Viskosität entsprechende Temperatur erwärmt, und daß nicht eingespritztes Überschußöl zum Förderbeginn zurückgeführt wird. Auf diese Weise steht an den Einspritzdüsen der Hilfsdiesel stets umlaufendes, warmes Mischöl von der richtigen Konsistenz an, und zwar selbst dann, wenn der Hilfsdiesel stillsteht. Dabei ist zu berücksichtigen, daß an Bord eines Schiffes im allgemeinen mehrere derartiger Hilfsantrieb-Verbrennungsmotoren vorgesehen sind, von denen beispielsweise einer ständig - ggf. mit wechselnder Last - läuft, während weitere je nach Bedarf zugeschaltet werden. Gemäß dem neuen Betriebsverfahren läuft nun Mischöl von der benötigten Konsistenz (Viskosität) stets um und steht von der ersten Umdrehung eines bislang stillstehenden Hilfsdiesels an zur Verfügung. Ferner ist vorteilhaft, daß ein rascher Lastwechsel bei den Hilfsdieseln nicht in gleicher Weise auf die Vorwärmung des Mischöls durchschlägt, weil immer eine größere Menge an Mischöl durch die Förder- und Rückführleitungen sowie den Heizer läuft, als jeweils benötigt wird, so daß ein plötzliches Abschalten eines Hilfsdiesels weder ein schlagartiges Herabfahren der Vorwärm-Heizleistung erfordert noch die Gefahr einer Überhitzung des Mischöls mit sich bringt. In entsprechender Weise braucht beim Wiederanlaufen eines Hilfsdiesels die Heizleistung nicht schlagartig hochgefahren zu werden; vor allem aber besteht nicht die Gefahr, daß in diesem Fall zunächst Mischöl ungeeigneter Viskosität eingespritzt wird und es deshalb zu Betriebsstörungen kommt.

Nach einer Weiterbildung dieses Betriebsverfahrens wird das Dieselöl und vorgewärmtes Schweröl erst kurz vor der Förderung in bestimmtem Verhältnis gemischt. Auf diese Weise ist es möglich, zusätzlich das Mischungsverhältnis der Mischöl-Bestandteile dem jeweiligen Bedarf der Hilfsdiesel - kurzfristig - anzupassen. Es kann daher im Dauerbetrieb - insbesondere wenn die Hilfsdiesel unter Hochlast fahren, mit einem höheren Schweröl-Anteil gearbeitet werden, so daß die mögliche Verbilligung des Schweröl-Einsatzes in vollem Umfange ausgenutzt wird.

Eine Anlage zur Ausführung des vorstehend beschriebenen Verfahrens mit mindestens einer Förderpumpe für das Mischöl, die es von einem Vorratsbehälter abzieht und den Einspritzdüsen des Verbrennungsmotors zuführt, zeichnet sich erfindungsgemäß dadurch aus, daß die Förderpumpe einen eigenen Antrieb hat, daß in der Mischöl-Zuleitung zu den Einspritzdüsen ein viskositätsgesteuerter Heizer liegt, und daß eine Rückführleitung von den Einspritzdüsen zum Vorratsbehälter vorgesehen ist.

Bei bekannten Hilfsdiesel-Anlagen an Bord von Schiffen liegen die Brennstoff-Förderpumpen am Abtrieb der jeweiligen Maschine und können demgemäß erst dann fördern, wenn die Maschine läuft. Dies wiederum führt dazu, daß der Maschine anfangs Mischöl falscher Viskosität zugeführt wird und es rasch zu Betriebsstörungen kommt, die nur mit beträchtlichem Aufwand zu beseitigen sind.

Der Heizer ist vorzugsweise mehrstufig ausgebildet und an einen abstromseitig angeordneten Viskositätsfühler geschaltet. Auf diese Weise läßt sich die Heizleistung rasch und genau dem jeweiligen Bedarf, nämlich der Bereitstellung der jeweils benötigten Menge von Mischöl bestimmter, zum Betrieb der Hilfsdiesel geeigneter Viskosität anpassen.

Nach einer Weiterbildung des Verfahrens sind außerdem getrennte Vorratsbehälter für Schweröl und Dieselöl vorgesehen, an die ein Mischer angeschlossen ist, der das Mischöl in einem wählbaren Mischungsverhältnis herstellt und dem Mischöl-Vorratsbehälter zuführt. Hiermit läßt sich - wie oben schon verfahrensmäßig erläutert - der Schweröl-Anteil des Mischöls kurzfristig so variieren, daß immer ein möglichst hoher Schweröl-Anteil eingesetzt wird.

Die Zeichnung veranschaulicht eine Ausführungsform der Erfindung an einer schematischen Anlagendarstellung mit drei Hilfsdieseln.

Ein Vorratstank 1 für Schweröl und ein Vorratstank 2 für Dieselöl sind, jeweils über die erforderlichen Armaturen wie Ventile, Filter etc., an einen Mischer 3 angeschlossen.

Dessen Ausgangsleitung 11 führt zum Vorratstank 4 für das Mischöl. Im Vorratstank 1 für das Schweröl ist ein Vorwärmer 12 angeordnet, der das Schweröl vor seiner Zuführung in den Mischer 3 auf ca. 70°C erwärmt.

An den Vorratstank 4 ist ein Ausgleichrohr 5 angeschlossen. Von diesem führt eine Vorlaufleitung 14 zur Förderpumpe 15, welcher aus Sicherheitsgründen eine gleichartige Pumpe parallelgeschaltet ist.

In Förderrichtung hinter der Förderpumpe 15 liegt ein mehrstufiger Heizer 7, auf dessen Abstromseite ein Viskositätsfühler 16 angeordnet ist, welcher über eine Steuerleitung 17 die Heizleistung des Heizers 7 dem jeweiligen Bedarf anpaßt, so daß die Viskosität des Mischöls in der weiterführenden Zuführleitung 14 immer gleich bleibt. Am Heizer 7 ist außerdem ein Schlammablaß 13 vorgesehen.

Die Zuführleitung 14 verzweigt sich in einen Verteiler 18, von dem die über Ventile und Filter führenden Anschlußleitungen 19 für die nur angedeuteten Einspritzdüsen 20 der Hilfsantrieb-Dieselmotoren 8 abgehen. Die Anschlußleitungen 19 setzen sich in Rückführleitungen 21 fort, die über einen Rücklaufverteiler 22 überschüssiges Mischöl in eine Rückführleitung 23 führen, welche an das Ausgleichsrohr 5 angeschlossen ist; der Zirkulations-Kreislaufs des Mischöls ist damit geschlossen.

Durch Ansteuern entsprechender Ventile kann an die Stelle des Mischöl-Kreislaufs ein reiner Dieselöl-Kreislauf gesetzt werden. Er führt vom Dieselöl-Vorratsbehälter 2 über eine wiederum mit den üblichen Armaturen ausgestattete Leitung 24 und ein weiteres Ausgleichsrohr 6 an eine Zuführleitung 25. Förderpumpen 26 darin drücken das Dieselöl in einen Verteiler 27. Von dort aus gelangt es durch die Anschlußleitungen 19 an die Einspritzdüsen 20 bzw. über die Leitungen 21 und einen Sammler 28 in eine Rücklaufleitung 29, die an das Ausgleichsrohr 6 zurückführt.

Es sei noch kurz erläutert, daß links in der Zeichnung ein Kühlsystem für die Einspritzdüsen schematisch dargestellt ist. Aus einem Vorratsbehälter 9 fließt Kühlöl - ggf. durch einen Vorwärmer 30 zu Beginn des Betriebs erwärmt - durch Förderpumpen 31 in einen Ölkühler 10 und gelangt aus diesem über einen Verteiler 32 in die Kühlvorläufe 33. Die Rückläufe 34 münden in einen Sammler 35, welcher seinerseits wieder am Vorratstank 9 angeschlossen ist.

Die Erfindung läßt sich anstatt bei Hilfsdieseln auch bei Mittelschnelläufer-Hauptantriebsmaschinen einsetzen, deren Schweröl/Dieselöl-Gemisch mittels der Förderpumpe 15, dem stromabwärts von der Förderpumpe 15 liegenden mehrstufigen Heizer 7 sowie dem stromabseitigen Viskositätsfähler 16 hinsichtlich seiner Konsistenz geregelt wird.

EISENFÜHR & SPEISER
Patentanwälte · European Patent Attorneys

Unser Zeichen: H 771
Anmelder/Inh.: Holtz
Aktenzeichen: Neuanmeldung
Datum: 14. Oktober 1981

Patentanwälte
Dipl.-Ing. Günther Eisenführ
Dipl.-Ing. Dieter K. Speiser
Dr.-Ing. Werner W. Rabus
Dipl.-Ing. Detlef Ninnemann

Gustav F. Holtz,
Seiffertstr. 36, 2800 Bremen 33

---

Verfahren und Anlage zum Betreiben eines Verbrennungsmotors an Bord von Schiffen

---

## ANSPRÜCHE

1. Verfahren zum Betreiben eines Verbrennungsmotors, insbesondere eines Hilfsantrieb-Dieselmotors oder eines als Hauptantrieb dienenden Mittelschnellläufer-Dieselmotors an Bord von Schiffen, mit einer Mischung aus Dieselöl und Schweröl, bei dem das Mischöl zum Verbrennungsmotor gefördert und dort eingespritzt wird, dadurch gekennzeichnet, daß das Mischöl während seiner Förderung auf die einer bestimmten Viskosität entsprechende Temperatur erwärmt, und daß nicht eingespritztes Überschußöl zum Förderbeginn zurückgeführt wird.

WWR/gj/eo

2. Verfahren nach Anspruch 1, dadurch gekennzeichnet, daß das Dieselöl und vorgewärmtes Schweröl kurz vor der Förderung an Bord des Schiffes in bestimmtem Verhältnis gemischt werden.

3. Anlage zur Ausführung des Verfahrens nach Anspruch 1 oder 2 mit mindestens einer Förderpumpe für das Mischöl, die es von einem Vorratsbehälter abzieht und den Einspritzdüsen des Verbrennungsmotors zuführt, dadurch gekennzeichnet, daß die Förderpumpe (15) einen eigenen Antrieb hat, daß in der Mischöl-Zuleitung (14) zu den Einspritzdüsen (20) ein viskositätsgesteuerter Heizer (7) liegt, und daß eine Rückführleitung (21, 22, 23) von den Einspritzdüsen zum Vorratsbehälter (4) vorgesehen ist.

4. Anlage nach Anspruch 3, dadurch gekennzeichnet, daß an den Vorratsbehälter (4) ein Ausgleichsrohr (5) angeschlossen und die Rückführleitung (23) an dieses gelegt ist.

5. Anlage nach Anspruch 3 oder 4, dadurch gekennzeichnet, daß der Heizer (7) mehrstufig ausgebildet und an einen abstromseitig angeordneten Viskositätsfühler (16) geschaltet ist.

6. Anlage nach einem der vorhergehenden Ansprüche, dadurch gekennzeichnet, daß außerdem getrennte Vorratsbehälter (1, 2) für Schweröl und Dieselöl vorgesehen sind, an die ein Mischer (3) angeschlossen ist, der das Mischöl in einem wählbaren Mischungsverhältnis herstellt und dem Mischöl-Vorratsbehälter (4) zuführt.

7. Anlage nach Anspruch 6, dadurch gekennzeichnet, daß im Schweröl-Vorratsbehälter (1) ein Vorheizer (12) angeordnet ist.

1/1

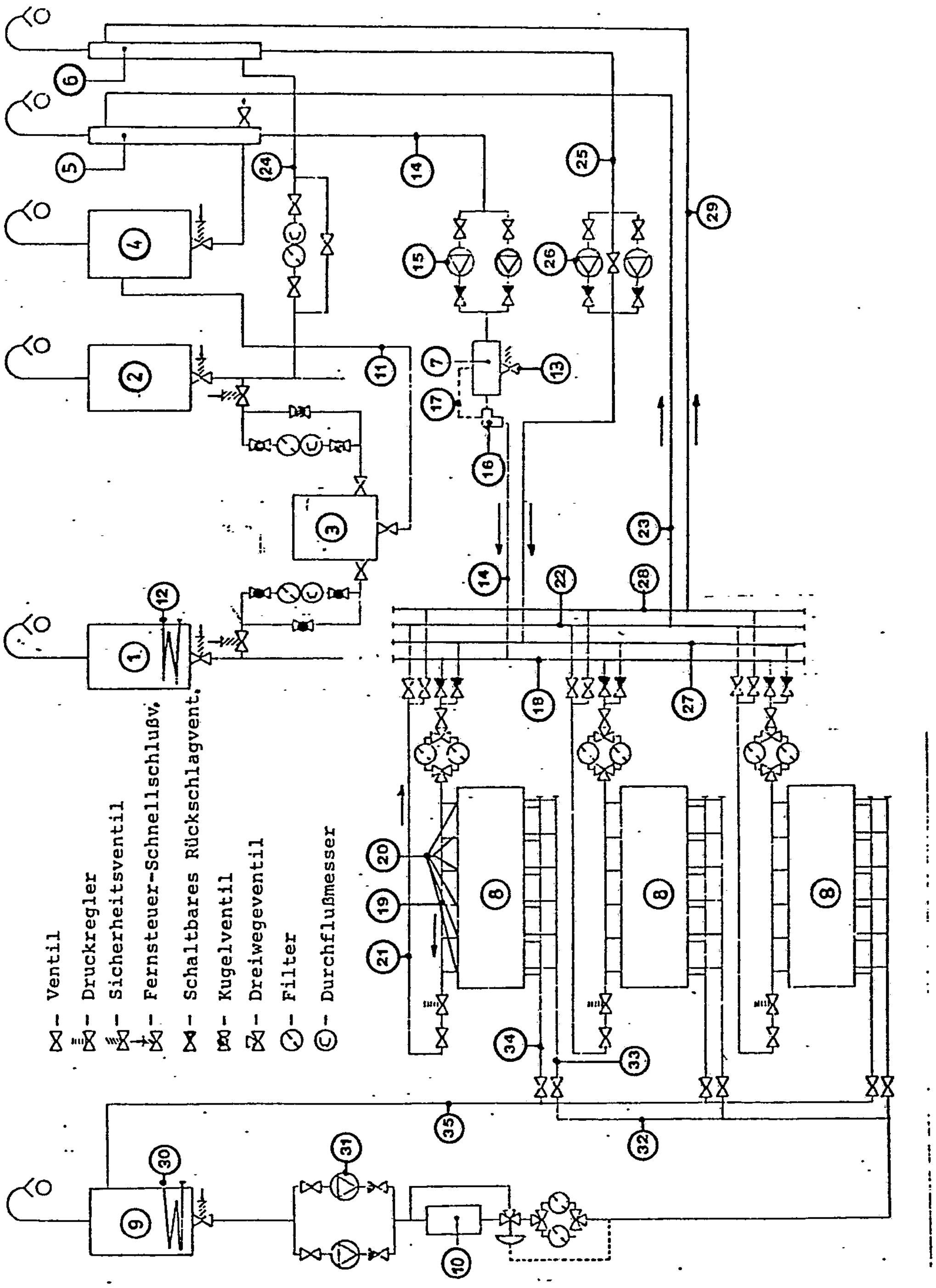

- Ventil
- Druckregler
- Sicherheitsventil
- Fernsteuer-Schnellschlußv.
- Schaltbares Rückschlagvent.
- Kugelventil
- Dreiwegeventil
- Filter
- Durchflußmesser

0050310

Europäisches Patentamt

# EUROPÄISCHER RECHERCHENBERICHT

Nummer der Anmeldung
EP 81 10 8335

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | US - A - 3 415 264 (BROWN) | |
| | * Spalte 1, Zeilen 11-57; Spalte 2, Zeilen 37-46; Spalte 3, Zeilen 5-75; Figur 1 * | 1,3,5, 6 |
| | -- | |
| | US - A - 3 022 425 (ROCKSTEAD) | |
| | * Spalte 1, Zeilen 10-38; Spalte 6, Zeilen 35-62; Spalte 10, Zeile 25 - Spalte 11, Zeile 18; Spalte 14, Zeilen 43-53; Figuren 1,5 * | 1,3,5, 7 |
| | -- | |
| | GB - A - 881 210 (DAIMLER BENZ) | |
| | * Seite 1, Zeilen 9-18; Zeile 83 - Seite 2, Zeile 48; Figuren * | 1,3,4 |
| | -- | |
| | US - A - 2 865 345 (HILTON) | |
| | * Spalte 2, Zeilen 1-7; Zeile 53 - Spalte 3, Zeile 56; Figuren * | 1 |
| | -- | |
| PE | EP - A - 0 034 534 (TACQUET) | |
| | * Seite 1, Zeile 1 - Seite 2, Zeile 33; Seite 3, Zeile 23 - Seite 4, Zeile 37; Figur 1 * | 1-6 |
| | ---- | |

KLASSIFIKATION DER ANMELDUNG (Int. Cl.³)

F 02 M 43/00
F 02 B 69/02

RECHERCHIERTE SACHGEBIETE (Int. Cl.³)

F 02 B
F 02 M
G 05 D

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 13-01-1982 | KOOIJMAN |

EPA form 1503.1 06.78